# Europäisches Patentamt

# European Patent Office

# Office européen des brevets

(11) Veröffentlichungsnummer: **0 168 714**
**B1**

(12) **EUROPÄISCHE PATENTSCHRIFT**

(45) Veröffentlichungstag der Patentschrift: **02.05.90**

(21) Anmeldenummer: **85108228.9**

(22) Anmeldetag: **03.07.85**

(51) Int. Cl.⁵: **H 02 B 1/04**

(54) Schnellbefestigung eines Gehäuses eines elektrischen Installationsgerätes auf einer Hut-Profiltragschiene.

(30) Priorität: **18.07.84 DE 3426377**

(43) Veröffentlichungstag der Anmeldung:
**22.01.86 Patentblatt 86/04**

(45) Bekanntmachung des Hinweises auf die
Patenterteilung:
**02.05.90 Patentblatt 90/18**

(84) Benannte Vertragsstaaten:
**AT DE FR GB IT NL**

(56) Entgegenhaltungen:
**DE-A-2 523 197
DE-A-2 742 784
FR-A-2 239 075
FR-A-2 304 245
GB-A-2 056 179**

(73) Patentinhaber: **Asea Brown Boveri
Aktiengesellschaft
Kallstadter Strasse 1
D-6800 Mannheim-Käfertal (DE)**

(72) Erfinder: **Goehle, Rolf, Ing. (grad.)
Im Bubenwingert 16
D-6906 Leimen (DE)**
Erfinder: **Schmitt, Volker
Ringstrasse 41
D-6901 Bammental (DE)**

(74) Vertreter: **Rupprecht, Klaus, Dipl.-Ing. et al
c/o Asea Brown Boveri Aktiengesellschaft
Zentralbereich Patente Postfach 100351
D-6800 Mannheim 1 (DE)**

Courier Press, Leamington Spa, England.

## Beschreibung

Die Erfindung betrifft eine Schnellbefestigung eines Gehäuses für ein elektrisches Installationsgerät, insbesondere eines Leitungsschutz (LS)-Schalters, an einer Tragschiene mit einer am Gehäuseboden angeordneten Ausnehmung, die von einer festen Nase und von einer beweglichen Nase begrenzt ist.

Derartige Schnellbefestigungen sind in großer Vielzahl bekannt. Beispielsweise ist aus der DE-B 23 37 352 eine Schnellbefestigungsvorrichtung bekannt, die als im wesentlichen L-förmiger Schieber ausgebildet ist, der in einer Ausnehmung am Gehäuse geführt ist und der als bewegliche Nase dient. Die Montage dieses Schiebers ist insoweit relativ kompliziert, als die Schraubendruckfeder und der Schieber zwei voneinander getrennte Teile sind; darüberhinaus ist das Einfädeln des Schiebers an das Gehäuse relativ kompliziert.

Eine weitere Ausführung eines Schiebers ist aus dem DE-U-70 36 089 bekanntgeworden; dort ist ebenfalls die Montage des Schiebers kompliziert, weil zum einen die Feder nicht an dem Schieber befestigt ist und zum anderen die Montage durch Einfädeln des Schiebers in eine Gehäuseöffnung sehr kompliziert ist.

Eine Ausführung, bei der der Schieber und die Feder miteinander eine Einheit bilden, ist aus dem DE-U-72 10 870 bekanntgeworden. Hier ist die Montage deshalb recht kompliziert, weil das Einfädeln des Schiebers in das Gehäuse nur mit Verformung des Schiebers durchgeführt werden kann, wobei auch besondere Aufmerksamkeit dem richtigen Sitz der Feder gewidmet werden muß.

Das DE-U-66 01 556 zeigt eine Schieberausführung, bei der am Schieber eine Blattfeder angeformt ist, die den Schieber bewegen soll. Die Montage dieser Schieberanordnung erfolgt von außen; die Feder selbst dient dabei der Verriegelung des Schiebers am Gehäuse.

Ferner ist aus der FR-A-23 04 245 eine Befestigungsvorrichtung bekanntgeworden, die aus einem mit einem Metallwinkel verstärkten Schließkörper gebildet ist, der von einer Schraubendruckfeder beaufschlagt ist.

Aus der GB-A-20 56 179 schließlich ist ein aus einer Tragschiene mit im seitlichen Abstand hieran angeformten Vorsprüngen und daran angepaßten Halteelementen gebildetes Befestigungssystem bekannt. Diese Vorsprünge dienen hierbei dazu, ein mit dem Halteelement versehenes Schaltgerät, das an der Tragschiene angesetzt wird, am seitlichen Verrutschen zu hindern, so daß jedes Schaltgerät einen definierten Platz einnimmt. Zu diesem Zwecke sind an jedem Halteelement seitlich Haltebleche angeformt, die rechtwinklig vom stufenförmig gebogenen Halteelement abgewinkelt sind und den dazwischengreifenden Vorsprung der Tragschiene seitlich begrenzen. Gleichzeitig hintergreifen die Haltebleche mit ihren angeschrägten vom Halteelement weggweisenden Kanten die Tragschiene.

Ausgehend vom vorstehend beschriebenen Stand der Technik ist es Aufgabe der Erfindung, eine Schnellbefestigung der eingangs genannten Art zu schaffen, die eine kostengünstig herstellbare vormontierbare Einheit bildet und eine einfache Montage gestattet.

Diese Aufgabe wird erfindungsgemäß durch die Merkmale des Anspruches 1 gelöst.

Die Platte besitzt erfindungsgemäß eine in Längsrichtung verlaufende Ausnehmung, in der die Druckfeder eingesetzt und darin aufgrund von Vorsprüngen gemäß kennzeichnenden Merkmalen des Anspruches 7 unverlierbar gehalten ist.

Darüberhinaus ist in vorteilhafter Weiterbildung der Erfindung gemäß Anspruch 9 vorgesehen, daß die Enden der beiden Arme von einem Steg verbunden sind, der die Platte jeweils seitlich überragt und mit einem an den Steg angeformten Vorsprung, der in eine Vertiefung in der Ausnehmung am Gehäuseboden eingreift, den Schieber am Gehäuse hält.

Weitere in der Beschreibung erläuterte vorteilhafte Ausgestaltungen sind in den weiteren Unteransprüchen angegeben.

Anhand der Zeichnung, in der ein Ausführungsbeispiel der Erfindung dargestellt ist, sollen die Erfindung sowie weitere Ausgestaltungen und Verbesserungen näher dargestellt werden.

Es zeigt.

Fig. 1 einen Schieber für eine Schnellbefestigungsvorrichtung, in perspektivischer Darstellung,

Fig. 2 eine Teilschnittansicht durch einen Installationsschalter gemäß Schnittlinie II-II der Fig. 3,

Fig. 3 eine Aufsicht auf die Bodenseite des Installationsschalters, in Pfeilrichtung III der Fig. 2,

Fig. 4 eine Schnittansicht gemäß der Schnittlinie IV-IV der Fig. 3.

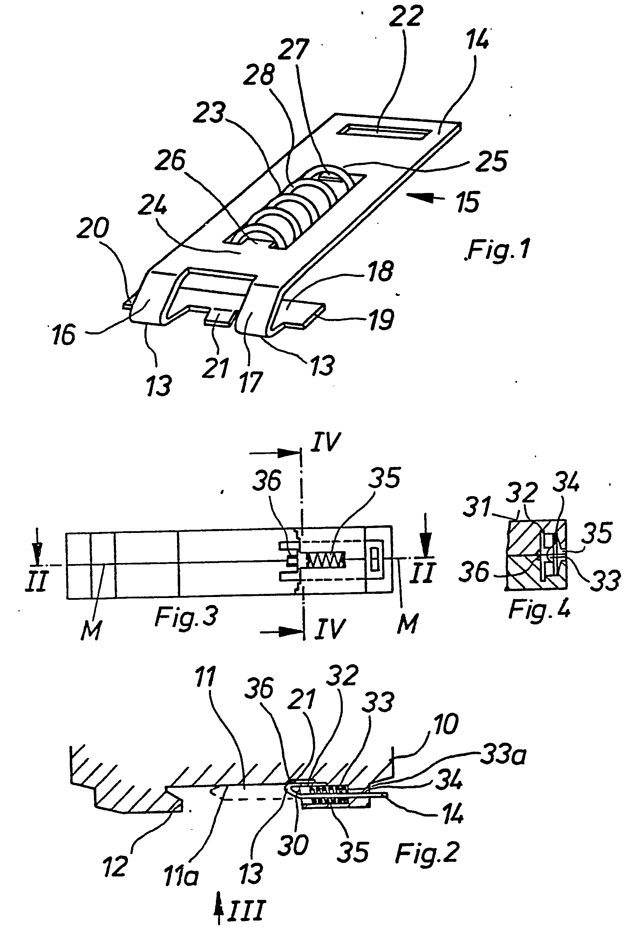

Es wird bezug genommen auf die Figur 2. Die Fig. 2 zeigt schematisch den Bodenbereich eines elektrischen Installationsgerätes, insbesondere eines Leitungsschutzschalters 10. Dort besitzt der Leitungsschutzschalter eine Ausnehmung II, an deren einen Seite eine feste Nase 12 und an deren anderer Seite eine bewegbare Nase 13 angeformt ist. Diese Nase 13 ist, wie weiter unten näher erläutert werden soll, an einem Schieber 14 angeformt.

Dieser Schieber besitzt eine rechteckige Grundform 15, auch Platte 15 genannt, an dessen einem Ende zwei Arme 16 und 17 angeformt sind, die hakenförmig zurückgebogen sind und an deren Biegestellen die Nasen 13 gebildet sind. Die Arme 16 und 17 sind in ihrem freien und wegen der Umbiegung dann unterhalb der Platte 15 liegenden Endbereich miteinander mittels eines Steges 18 verbunden, der beidseitig die Platte 15 bzw. deren Längskanten mit Ausformungen 19 und 20 überragt. Im mittleren Bereich besitzt der Steg 18 einen Vorsprung 21, der, wie aus Fig. 2 ersichtlich ist, auf der von der freien End-bzw. Querkante abgewandten Kante des Steges 18, die zwischen den beiden Armen 16 und 17 verläuft, nach unten herausgedrückt ist.

Die Platte 15 besitzt einen an ihrem einen, den Armen 16 und 17 entgegengesetzten Ende einen rechteckigen Querschlitz 22 und im Bereich der Arme 16 und 17 eine Öffnung 23; der Schlitz 22 verläuft annähernd parallel zu der hinteren Schmalkante der Platte 15, wogegen die Öffnung 23 parallel zu den Längskanten ausgerichtet und in der Mitte der Platte 15 angeordnet ist. Die Ausnehmung 23 nimmt eine Druckfeder 28 auf, die den Schieber 14 federnd nach innen gegen die Hutprofilschiene drückt, Die sich gegenüberliegenden quer zur Längserstreckung der Platte 15 verlaufenden schmalen Öffnungskanten 24 und 25 der Öffnung 23 besitzen vorspringende Ansätze 26 und 27, die ins Innere der Druckfeder bzw. Schraubendruckfeder 28 eingreifen so der Führung derselben dienen.

Die Ausnehmung 11 ist auf der der festen Nase 12 gegenüberliegenden Seite in üblicher Weise durch eine Seitenwand 30 begrenzt, wodurch — um dies mit anderen Worten auszudrücken — ein Sockelvorsprung gebildet ist. Der Schieber 14 durchdringt diesen Sockelvorsprung und dabei sind die Längskanten der Platte 15 bzw. die Platte 15 selbst in einem parallel und in Abstand zum Bodenbereich 11a verlaufenden Halterungsschlitz 34 geführt. Von der Seitenwand 30 geht ein Sackloch 33 aus und verläuft parallel zur Bodenfläche 11a; das Sackloch 33 dient zur Aufnahme und Führung der Schraubenfeder und ist an deren Abmessungen angepaßt Zur Bodenfläche hin ist das Sackloch 33 halbkreisförmig ausgebildet und zum freien Ende bzw. zur freien Fläche des Sockelvorsprungs hin über einen Schlitz 35 offen.

In Verlängerung des Bodenbereiches bzw. der Bodenfläche 11a ist in den Sockelbereich ein erster Schlitz 32 eingebracht, der zur Aufnahme der Ausformungen 19 und 20 des Steges 18 dient. Ferner ist dort noch eine Vertiefung 36 im Bodenbereich 11a eingebracht, in die der Vorsprung 31 im montierten Zustand des Schiebers eingreifen kann.

Die Montage des Schiebers wird wie folgt durchgeführt: Zunächst wird aus einem Stahlblechteil die Form des Schiebers 14 gestanzt, mit den Umbiegungen der Arme 16 und 17 und den einzelnen Ausnehmungen 23 und 22. Danach wird die Feder 28 in die Ausnehmung eingesetzt und zwar dergestalt, daß die vorspringenden Ansätze 26 und 27 ins Innere der Feder 28 eingreifen und diese so am Schieber unverlierbar haltern. Auf die Weise wird der Schieber mit daran angebrachter Feder 28 vormontierbar als Einheit gefertigt.

Zur Montage des Schiebers an das Gehäuse wird dieser mit der außenliegenden Fläche des Steges 18 auf die Bodenfläche 11a gelegt; die Platte 15 befindet sich dann in Abstand zu dem Boden bzw. der Bodenfläche 11a. Danach wird der Schieber 14 nach rechts, also zum Sockelvorsprung hin verschoben, wobei die Platte 15 bzw. die Plattenkanten 15 in den Halterungsschlitz (auch zweiter Schlitz) genannt) 34 eingeführt wird, bzw. werden. Dies erfolgt einfach durch Verschieben des Schiebers auf der Bodenfläche

11a. Demgemäß ist der Abstand des Halterungsschlitzes (34) von der Bodenfläche 11a genauso groß wie der Abstand der Außenfläche des Steges 18 von der Platte 15. Der Schieber wird dann soweit eingefügt in den Halterungsschlitz, bis die Ausformungen 19 und 20 in den ersten Schlitz 32 eingreifen bzw. bis der Vorsprung 21 in die Vertiefung 36 eingreifen kann. Aufgrund der dabei vorhandenen Toleranzen ist der Schieber an dem Gehäuse unverlierbar gehalten. Beim Herausziehen des Schiebers durch Betätigung des Schiebers mittels eines in den Schlitz 22 einfügbaren Werkzeuges schlagen entweder die Ausformungen 19 und 20 an dem Ende des ersten Schlitzes an dem Ende des ersten Schlitzes an, oder — je nach Toleranz — es gelangen die Windungen der Feder 28 auf Block; ein Hineindrücken des Schiebers in die Ausnehmung 11 über die Stellung hinaus, in der die Feder 28 entspannt ist, wird dadurch verhindert, daß der Vorsprung 21 an die Endwand der Vertiefung 36 anschlägt. Damit ist der Schieber im wesentlichen unverlierbar am Gehäuse gehalten; eine Demontage des Schiebers ist — wenn man den Schieber ausreichend verformt — sehr wohl noch möglich.

Die Aufgabe des Steges besteht im wesentlichen darin, eine Führungs- bzw. Gleitfläche für den Schieber 14 an der 8odenfläche 11a der Ausnehmung 11 zu bilden.

**Patentansprüche**

1. Schnellbefestigung eines Gehäuses für ein elektrisches Installationsgerät, insbesondere für einen Leitungsschutzschalter (10), an einer Hutprofilschiene, mit einer am Gehäuseboden (11a) angeordneten und von einer festen Nase (12) und einer bewegbaren Nase (13) begrenzten Ausnehmung (11), wobei die Nasen (12, 13) die freien Schenkel der Hutprofilschiene hintergreifen und die bewegbare Nase durch einen in einem Schlitz des Gehäuses geführten Schieber (14) gebildet ist, der von einer Feder (28) beaufschlagt gegen die Hutprofilschiene gedrückt ist und aus einer langgestreckten rechtwinkligen Platte (15) besteht, an deren eine Schmalseite zwei parallel zueinander verlaufende Arme (16, 17) angeformt sind, die hakenförmig zurückgebogen sind und deren Biegestellen die Nasen (13) bilden, wobei die zurückgebogenen Enden der Arme (16, 17) mittels eines Steges (18) verbunden sind, der parallel zur Schmalseite der Platte (15) ausgerichtet ist und diese beidseitig überragt, sowie mit einem an der zur Platte (15) entgegengesetzt liegenden Außenfläche des Steges (18) angeformten Vorsprung (21), der in eine Vertiefung (36) an der Bodenfläche (11a) der Ausnehmung (11) eingreift.

2. Schnellbefestigung nach Anspruch 1, dadurch gekennzeichnet, daß die Platte (15) eine in Längsrichtung verlaufende Durchbrechung (23) aufweist, in der die als Schraubendruckfeder ausgebildete Feder (28) eingesetzt ist und darin unverlierbar gehalten ist.

3. Schnellbefestigung nach einem der Ansprüche 1 oder 2, dadurch gekennzeichnet, daß an dem den Armen (16, 17) entgegengesetzt liegenden Ende der Platte (15) ein parallel zu dessen Schmalseitenkanten verlaufender Schlitz (22) vorgesehen ist.

4. Schnellbefestigung nach einem der vorigen Ansprüche, dadurch gekennzeichnet, daß im Bereich des Bodens der Ausnehmung (11) ein in Verlängerung des Bodens (11a) verlaufender erster Schlitz (32) und in Abstand dazu ein das Gehäuse nach außen durchdringender, parallel zum Boden (11a) verlaufender zweiter Schlitz (34) angeformt ist, wobei der erste Schlitz (32) zur Aufnahme der Ausformung (19, 20) und der zweite Schlitz (34) zur Aufnahme der Platte (15) dient.

5. Schnellbefestigung nach Anspruch 4, dadurch gekennzeichnet, daß zusätzlich im Bereich des zweiten Schlitzes (34) eine in Richtung der Verschiebung des Schiebers verlaufende, von der der bewegbaren Nase (13) benachbarten Seitenwand (30) der Ausnehmung (11) ausgebendes Sackloch (33) vorgesehen ist, das der Aufnahme und Führung der Feder (28) dient und in einer Bodenwand (33a) endet, gegen die das eine Ende der Feder (28) zum Anliegen kommt.

6. Schnellbefestigung nach einem der vorigen Ansprüche, dadurch gekennzeichnet, daß die Vertiefung (36) im Bereich des ersten Schlitzes (32) annähernd in der Mitte im Bodenbereich (11a) vorgesehen ist, und daß eine Verschiebung des Schiebers (14) in die Ausnehmung (11) hinein durch Anschlagen der Nase (21) gegen eine Wand der Ausnehmung gehindert ist.

7. Schnellbefestigung nach einem der vorigen Ansprüche, dadurch gekennzeichnet, daß an den schmalen, quer zur Längserstreckung der Platte (15) verlaufenden Kanten der Ausnehmung (23) in der Platte (15) Vorsprünge (26, 27) angeformt sind, die im montierten Zustand ins Innere der Feder (28) eingreifen und so diese im wesentlichen unverlierbar festhalten.

8. Schnellbefestigung nach einem der vorigen Ansprüche, dadurch gekennzeichnet, daß der Halterungsschlitz (34) für den Schieber (14) von der Bodenfläche (11a) der Ausnehmung (11) genauso weit entfernt ist, wie der Abstand der der Platte (15) entgegengesetzten Außenfläche des Steges (18) von der Platte beträgt.

9. Schnellbefestigung nach einem der vorhergehenden Ansprüche mit einem zur Schmalseite der Platte (15) parallelen Steg (18), der die Enden der Arme (16, 17) verbindet und die Platte (15) jeweils seitlich überragt, und mit einem an den Steg (18) angeformten Vorsprung (21) der in eine Vertiefung (36) der Ausnehmung (11) greift und so den Schieber (14) unverlierbar am Gehäuse hält.

**Revendications**

1. Fixation rapide d'un boîtier pour appareils d'installation électrique, notamment pour un disjoncteur de protection de ligne (10), sur un rail à profil en chapeau, le boîtier présentant sur son fond (11a) un évidement (11) bordé par un nez fixe (12) et par un nez mobile (13), les nez (12, 13) se plaçant derrière les ailes libres du rail à profil en chapeau et le nez mobile étant formé par un coulisseau (14) qui est guidé dans une fente du boîtier et sollicité par un ressort (28) l'appuyant contre le rail à profil en chapeau, et est constitué par une plaque rectangulaire allongée (15) sur un petit côté de laquelle sont formés deux bras mutuellement parallèles (16, 17) qui sont rabattus en forme de crochet et dont les plis forment le nez (13), les extrémités repliées des bras (16, 17) étant reliées par une âme (18) dirigée parallèlement au petit côté de la plaque (15) des deux côtés de laquelle elle déborde, un saillant (21) étant formé sur la surface extérieure de l'âme (18) éloignée de la plaque (15) et s'engageant dans une dépression (36) dans la surface (11a) du fond de l'évidement (11).

2. Fixation rapide selon revendication 1, caractérisée par le fait que la plaque (15) présente un ajour (23) s'étendant longitudinalement, dans lequel le ressort (28) réalisé sous la forme d'un ressort hélicoïdal est inséré et maintenu de manière imperdable.

3. Fixation rapide selon l'une des revendications 1 ou 2, caractérisée par le fait qu'une fente (22) parallèle au petit côté de la plaque est prévue dans l'extrémité de la plaque (15) éloignée des bras (16, 17).

4. Fixation rapide selon l'une des revendications précédentes, caractérisée par le fait que dans la région du fond de l'évidement (11) sont formées une première fente (32) s'étendant dans le prolongement du fond (11a) et, à distance de cette première fente, une deuxième fente (34) s'étendant parallèlement au fond (11a) et traversant le boîtier vers l'extérieur, la première fente (32) servant à recevoir les parties débordantes (19, 20) de l'âme et la deuxième fente (34) servant à recevoir la plaque (15).

5. Fixation rapide selon revendication 4, caractérisée par le fait qu'il est en outre prévu, dans la région de la deuxième fente (34), un trou borgne (33) s'étendant dans la direction du déplacement en translation du coulisseau et partant de la paroi latérale (30) de l'évidement (11) voisine du nez mobile (13), ce trou borgne servant à recevoir et guider le ressort (28) et se terminant dans une paroi (33a) du fond contre laquelle vient s'appliquer la première extrémité du ressort (28).

6. Fixation rapide selon l'une des revendications précédentes, caractérisée par le fait que la dépression (36) dans la région du fond (11a) est prévue dans la région de la première fente (32), approximativement au centre du fond (11a), et par le fait qu'un déplacement du coulisseau (14) dans le sens de sa pénétration dans l'évidement (11) est évité par aboutement du saillant (21) contre une paroi de l'évidement.

7. Fixation rapide selon l'une des revendications précédentes, caractérisée par le fait que, sur les bords étroits de l'évidement (23) de la plaque (15) qui s'étendent perpendiculairement à la longueur de celle-ci, sont formés des saillants (26, 27) qui, dans la condition montée, s'engagent dans l'intérieur du ressort (28) et maintiennent ainsi ce dernier de manière sensiblement imperdable.

8. Fixation rapide selon l'une des revendications précédentes, caractérisée par le fait que la fente (34) pour retenir le coulisseau (14) est séparée de la surface du fond (11a) de l'évidement (11) par une distance exactement égale à la distance entre la plaque (15) et la surface extérieure de l'âme (18) éloignée de la plaque (15).

9. Fixation rapide selon l'une des revendications précédentes, avec une âme (18) qui est parallèle au petit côté de la plaque (15), relie les extrémités des bras (16, 17) et déborde au-delà de la plaque (15), de chaque côté de celle-ci, et avec un saillant (21) qui est formé sur l'âme (18), s'engage dans une dépression (36) de l'évidement (11) au fond du boitier et maintient ainsi le coulisseau (14) de manière imperdable sur le boîtier.

**Claims**

1. Quick-fastener of a housing for electrical installation equipment, in particular for an automatic cut-out (10), on a profiled top hat rail, having a recess (11) arranged on the housing bottom (11a) and limited by a fixed nose (12) and a movable nose (13), the noses (12, 13) gripping behind the free legs of the profiled top hat rail and the movable nose being formed by a slide (14) guided in a slot of the housing, which slide (14) is pressed, charged by a spring (28), against the profiled top hat rail and consists of an elongated rectangular base-plate (15), to one narrow side of which two arms (16, 17) extending parallel to each other are moulded on, which are bent back in a hook-like shape and the bending points of which form the noses (13), the bent back ends of the arms (16, 17) being connected by means of a web (18) which is aligned parallel to the narrow side of the base-plate (15) and projects beyond the latter on both sides, and having a projection (21), moulded onto the outside surface of the web (18) lying opposite the baseplate (15), which projection (21) engages in an indentation (36) on the bottom surface (11a) of the recess (11).

2. Quick-fastener according to Claim 1, characterized in that the base-plate (15) has a break-through (23) extending in the longitudinal direction, in which the spring (28), constructed as a helical coil compression spring, is placed and is held non-detachably in the break-through.

3. Quick-fastener according to one of Claims 1 or 2, characterized in that, at the end of the base-plate (15), lying opposite the arms (16, 17), a slot (22) extending parallel to the narrow side edges of the base-plate (15) is provided.

4. Quick-fastener according to one of the preceding claims, characterized in that, in the area of the bottom of the recess (11) a first slot (32), extending as an extension of the bottom (11a), is moulded on and, at a distance to the first slot (32), a second slot (34), penetrating the housing to the outside and extending parallel to the bottom (11a), is moulded on, the first slot (32) serving to receive the protrusion (19, 20) and the second slot (34) to receive the base-plate (15).

5. Quick-fastener according to Claim 4, characterized in that, additionally in the region of the second slot (34), a blind hole (33) is provided extending in the direction of displacement of the slide and starting from the sidewall (30), adjacent to the movable nose (13), of the recess (11), which blind hole (33) serves to receive and guide the spring (28) and ends in a bottom wall (33a), against which the one end of the spring (28) comes to rest.

6. Quick-fastener according to one of the preceding claims, characterized in that the indentation (36) is provided in the area of the first slot (32) approximately in the middle of the bottom area (11a), and in that a displacement of the slide (14) into the recess (11) is prevented by the nose (21) contacting a wall of the recess.

7. Quick-fastener according to one of the preceding claims, characterized in that, in the base-plate (15), projections (26, 27) are moulded onto the narrow edges of the recess (23) extending transversely to the longitudinal extent of the base plate (15), which projections (26, 27) engage in mounted state in the interior of the spring (28) and thus retain the latter essentially non-detachably.

8. Quick-fastener according to one of the preceding claims, characterized in that the retaining slot (34) for the slide (14) is just as far away from the bottom surface (11a) of the recess (11) as the distance of the outside surface, opposite the base-plate (15), of the web (18) from the base-plate.

9. Quick-fastener according to one of the preceding claims, having a web (18) parallel to the narrow side of the base-plate (15), which web (18) connects the ends of the arms (16, 17) and projects laterally beyond the base-plate (15) in each case and having a projection (21) moulded onto the web (18), which projection (21) engages in an indentation (36) of the recess (11) and in this way holds the slide (14) non-detachably on the housing.

Fig.1

Fig.3

Fig.4

Fig.2